(19) Europäisches Patentamt
European Patent Office
Office européen des brevets

(11) **EP 1 940 178 A2**

(12) **EUROPEAN PATENT APPLICATION**

(43) Date of publication:
**02.07.2008 Bulletin 2008/27**

(51) Int Cl.:
***H04N 7/34*** *(2006.01)*

(21) Application number: **07114650.0**

(22) Date of filing: **21.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.12.2006 KR 20060136592**

(71) Applicant: **Samsung Electronics Co., Ltd.**
**Suwon-si,**
**Gyeonggi-do 442-742 (KR)**

(72) Inventor: **Kim, Eun-seok**
**663 Gongse-dong, Giheung-gu**
**Yongsin-si**
**Gyeonggi-do (KR)**

(74) Representative: **Perkins, Dawn Elizabeth et al**
**Venner Shipley LLP**
**20 Little Britain**
**London EC1A 7DH (GB)**

(54) **Generating a reduced image from a compressed original image comprising blocks encoded by intra prediction**

(57) A method for generating a reduced image of an original image comprising blocks encoded by intra prediction, and an image apparatus thereof are provided. The method for generating a reduced image, includes extracting an average of a compression block of a compression image, the compression image including blocks encoded by intra prediction; computing an average of a prediction block, using a portion of components of at least one of neighboring blocks to the prediction block corresponding to the compression block; and generating a reduced image using the average of the compression block and the average of the prediction block. Therefore, a reduced image of an original image can be generated without decoding blocks of the original image comprising blocks encoded by intra prediction.

EP 1 940 178 A2

**Description**

Apparatuses and methods consistent with the present invention relate to generating a reduced image, and more particularly, to generating a reduced image of an original image.

Recently, various types of digital multimedia services using high definition televisions (HDTVs), digital multimedia broadcasting (DMB), or Internet Protocol (IP) TV have become widespread as a result of the rapid development of technologies relating to digital moving image processing. In particular, since HDTVs provide a large size screen with a high image quality, products, such as set-top boxes for HDTVs or personal video recorders (PVRs) for HDTVs, need to enable a user to easily search for scenes or programs which the user desires to view. This function is generally provided through a reduced image called as a thumbnail image.

Thumbnail images are typically extracted using a DC image extraction method using a DC component indicating the average of blocks in a spatial frequency domain represented by a discrete cosine transform (DCT) coefficient.

The DC image extraction method may be used in a Moving Picture Experts Group-4 (MPEG-4) using a technology for individually compressing and encoding each block in the spatial frequency domain represented by the DCT coefficient.

However, a current block is dependent on a previous block and encoded in an H.264 encoding blocks by the intra prediction, and thus it is impossible to apply the above DC image extraction method to the H.264 environment.

Accordingly, in order to generate a thumbnail image of an original image comprising blocks encoded by intra prediction, the blocks of the original image need to be decoded to obtain an original image. Therefore, the computations and time required for generating the reduced image are increased.

Exemplary embodiments of the present invention address the above disadvantages and other disadvantages not described above. Also, the present invention is not required to overcome the disadvantages described above, and an exemplary embodiment of the present invention may not overcome any of the problems described above.

The present invention provides a method for generating a reduced image and an image apparatus thereof, in which a reduced image of an original image is generated without decoding blocks of the original image comprising blocks encoded by intra prediction.

According to an aspect of the present invention, there is provided a method for generating a reduced image, the method comprising extracting an average of a compression block of a compression image, the compression image comprising blocks encoded by intra prediction; computing an average of a prediction block, using a portion of components of at least one of neighboring blocks of the prediction block corresponding to the compression block; and generating a reduced image using the average of the compression block and the average of the prediction block.

The neighboring blocks may be positioned at an upper-left edge, an upper edge, an upper-right edge and a left edge of the prediction block, and the generating may comprise summing the average of the compression block and the average of the prediction block to generate a reduced image.

The computing of the average of the prediction block may use frequency values at bottommost components of a neighboring block at the upper-left edge of the prediction block, frequency values at bottommost components of a neighboring block at the upper edge of the prediction block, frequency values at bottommost components of a neighboring block at the upper-right edge of the prediction block, and frequency values at rightmost components of a neighboring block at the left edge of the prediction block.

The method may further comprise extracting components at bottommost components of the compression block and components at rightmost components of the compression block; computing components at bottommost components of the prediction block and components at rightmost components of the prediction block, using the portion of the components of the at least one of neighboring blocks to the prediction block; and storing bottommost components of a block, computed using the bottommost components of the compression block and the bottommost components of the prediction block, and rightmost components of the block, computed using the rightmost components of the compression block and the rightmost components of the prediction block.

The compression image comprising the blocks encoded by intra prediction may be an image compressed using an H.264 compression standard.

According to another aspect of the present invention, there is provided an image provider which provides a compression image comprising blocks encoded by intra prediction; and a reduced image generator which generates a reduced image using an average of a compression block of the compression image and an average of a prediction block computed using a portion of components of at least one of neighboring blocks of the prediction block corresponding to the compression block.

The reduced image generator may comprise a compression block average extractor which extracts the average of the compression block; a prediction block average computation unit which computes the average of the prediction block using a portion of components of the at least one of the neighboring blocks which are positioned at an upper-left edge, an upper edge, an upper-right edge and a left edge of the prediction block; and an average adder which sums the average of the compression block and the average of the prediction block to generate a reduced image.

The prediction block average computation unit may compute the average of the prediction block, using bottommost components of a neighboring block at the upper-left edge of the prediction block, bottommost components of a neighboring block at the upper edge of the prediction block, bottommost components of a neighboring block at the upper-right edge of the prediction block, and rightmost components of a neighboring block at the left edge of the prediction block.

The reduced image generator may further comprise an extractor which extracts bottommost components of the compression block, rightmost components of the compression block, and an average of the compression block; a computation unit which computes bottommost components of the prediction block, rightmost components of the prediction block, and an average of the prediction block using the portion of the components of the at least one of neighboring blocks to the prediction block; and a memory which stores bottommost components of a block, computed using the bottommost components of the compression block and the bottommost components of the prediction block, and rightmost components of the block, computed using the rightmost components of the compression block and the rightmost components of the prediction block.

The compression image comprising the blocks encoded by intra prediction may be an image compressed using an H.264 compression standard.

The above and/or other aspects of the present invention will be more apparent by describing certain exemplary embodiments of the present invention with reference to the accompanying drawings, in which:

Figure 1 is a block diagram of an image apparatus according to an exemplary embodiment of the present invention;
Figure 2 is an exemplary view for explaining an operation for computing the average of a current prediction block on a pixel domain;
Figure 3 is a detailed block diagram of a reduced image generator of Figure 1, according to an exemplary embodiment of the present invention;
Figure 4 is a flowchart explaining a method for generating a reduced image according to an exemplary embodiment of the present invention;
Figure 5 is a block diagram of an image apparatus according to another exemplary embodiment of the present invention; and
Figure 6 is a flowchart explaining a method for generating a reduced image according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

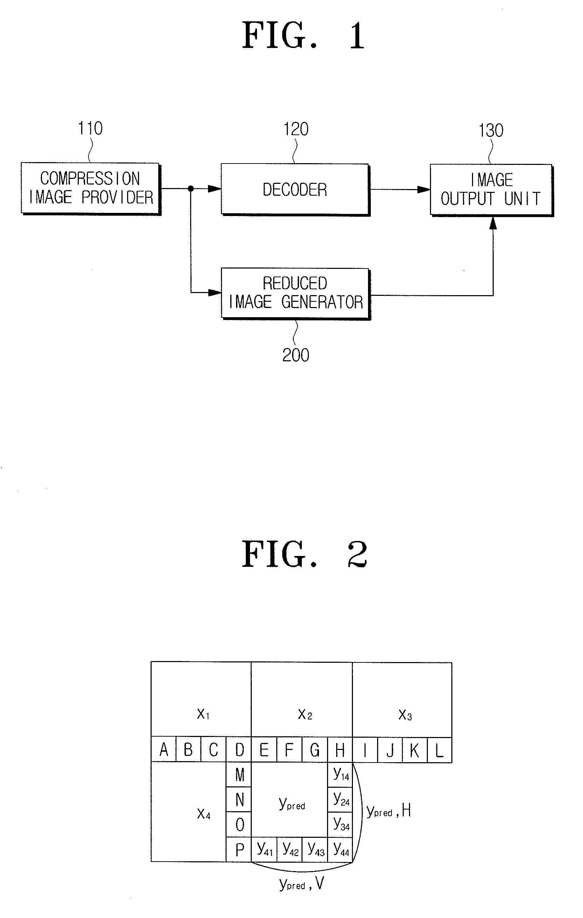

Figure 1 is a block diagram of an image apparatus according to an exemplary embodiment of the present invention. The image apparatus generates a reduced image of an original image to provide the reduced image to a user. The image apparatus may generate a reduced image of an original image without decoding blocks of the original image comprising the blocks encoded by an intra prediction.

In Figure 1, the image apparatus according to an exemplary embodiment of the present invention comprises a compression image provider 110, a decoder 120, an image output unit 130, and a reduced image generator 200.

The compression image provider 110 provides a compression image to the decoder 120 and reduced image generator 200. The compression image provided by the compression image provider 110 may be a compression image comprising blocks encoded by intra prediction.

The compression image provided by the compression image provider 110 may be i) a compression image received from a broadcasting station wiredly or wirelessly, ii) a compression image received from an external device, or iii) a compression image read out from a recoding medium.

The decoder 120 may decode the blocks of the compression image provided by the compression image provider 110, and generate an extended (uncompressed) image.

The image output unit 130 displays an image output from the decoder 120 and/or a reduced image output from the reduced image generator 200 on a display.

The reduced image generator 200 computes the average of each block of a current image, and generates a reduced image based on the computed average values.

The average of a block corresponds to the sum of an average of a compression block and an average of a prediction block, that is, "the average of a block = the average of a compression block + the average of a prediction block". The compression block refers to a block of the compression image provided by the compression image provider 110, and the prediction block refers to a block whose components are predicted based on components of neighboring blocks. The average of a compression block is extracted using the components of the compression block, but the average of a prediction block is computed using the components of the neighboring blocks.

Hereinafter, a process for computing the average of a prediction block will be described in detail. Figure 2 is an exemplary view for explaining an operation for computing the average of a current prediction block $y_{pred}$ on a pixel domain. Pixels and pixel values are represented by the same character for the understanding and convenience of the description. For example, a pixel value of pixel "A" is "A".

The average of the current prediction block $y_{pred}$ is computed using pixel values of some pixels among pixels of blocks $x_1$, $x_2$, $x_3$, and $x_4$ adjacent to the current prediction block $y_{pred}$. More specifically, the average of the current prediction block $y_{pred}$ is computed using 1) "V-components" (pixel values A, B, C, and D of pixels at the bottommost position) of block $x_1$ at the upper-left edge of the current prediction block $y_{pred}$, 2) "V-components" (pixel values E, F, G, and H of pixels at the bottommost position) of block $x_2$ at the upper edge of the current prediction block $y_{pred}$, 3) "V-components" (pixel values I, J, K, and L of pixels at the bottommost position) of block $x_3$ at the upper-right edge of the current prediction block $y_{pred}$, and 4) "H-components" (pixel values M, N, O, and P of pixels at the rightmost position) of block $x_4$ at the left edge of the current prediction block $y_{pred}$. The computation is performed by the following Equation 1.

[Equation 1]

$$y_{pred,ave} = x_{1,V}\, c_1 + x_{2,V}\, c_2 + x_{3,V}\, c_3 + c_4\, x_{4,H}$$

$$M(y_{pred,ave}) = y_{pred,ave\,(0,0)}$$

In Equation 1, $M(Y_{pred,ave})$ indicating the coefficient of (0,0) at the upper leftmost component of $y_{pred,ave}$ is the average of the current prediction block $y_{pred}$. $x_{,V}$ indicating a vertical matrix of V-components of block x is a square matrix obtained by vertically arranging the V-components of block x. For example, $x_{2,V}$ indicating a vertical matrix of V-components of block $x_2$ is shown below.

$$X_{2,V} = \begin{matrix} E & F & G & H \\ E & F & G & H \\ E & F & G & H \\ E & F & G & H \end{matrix}$$

Additionally, $x_{,H}$ indicates a horizontal matrix of H-components of block x, which is a square matrix obtained by horizontally arranging the H-components of block x. For example, $x_{4,H}$ indicating a vertical matrix of H-components of block $x_4$ is shown below.

$$X_{4,H} = \begin{matrix} M & M & M & M \\ N & N & N & N \\ O & O & O & O \\ P & P & P & P \end{matrix}$$

$c_1$, $c_2$, $c_3$, and $c_4$ indicating coefficient matrices are determined by compression mode. A compression mode of a 4×4 block comprises a vertical direction prediction mode, a horizontal direction prediction mode, a DC prediction mode, and a diagonal down left prediction mode. Those modes are known to those skilled in the art, so a more detailed description thereof is omitted.

In order to compute the average of a next prediction block, the V-components and H-components of the current block are required. Accordingly, V-prediction components $y_{41}$, $y_{42}$, $y_{43}$ and $y_{44}$, and H-prediction components $y_{14}$, $y_{24}$, $y_{34}$ and $y_{44}$ of the current prediction block $y_{pred}$ are needed in order to compute the V-components and H-components of the current block. The V-prediction components and H-prediction components of the current prediction block $y_{pred}$ are computed in advance using the following Equation 2.

[Equation 2]

$$y_{pred,V} = x_{1,V} c_{1,V} + x_{2,V} c_{2,V} + x_{3,V} c_{3,V} + \left( c_{4,V} x_{4,H} \right)^T$$

$$y_{pred,H} = \left( x_{1,V} c_{1,H} + x_{2,V} c_{2,H} + x_{3,V} c_{3,H} \right)^T + c_{4,H} x_{4,H}$$

In Equation 2, $y_{pred,V}$ represents a vertical matrix of the V-prediction components of the current prediction block $y_{pred}$, and $y_{pred,H}$ represents a horizontal matrix of the H-prediction components of the current prediction block $y_{pred}$. $c_{1,V}$, $c_{2,V}$, $c_{3,V}$, $c_{4,V}$ $c_{1,H}$, $c_{2,H}$, $c_{3,H}$, and $c_{4,H}$, indicating coefficient matrices are determined by compression mode.

The process for computing the average $M(Y_{pred,ave})$ of the current prediction block $y_{pred}$ on the pixel domain was explained above. However, in order to obtain the average of the current prediction block without decoding blocks, the average of the current prediction block needs to be computed on a frequency domain. A computation formula used for computing the average, V-prediction components and H-prediction components of the current prediction block on a frequency domain is obtained by the frequency conversion of Equations 1 and 2, and as a result, is represented by the following Equation 3.

[Equation 3]

$$Y_{pred,ave} = X_{1,V} C_1 + X_{2,V} C_2 + X_{3,V} C_3 + C_4 X_{4,H} \qquad \ldots (1)$$

$$M(Y_{pred,ave}) = \frac{1}{4} Y_{pred,ave\,(0,0)} \qquad \ldots (2)$$

$$Y_{pred,V} = X_{1,V} C_{1,V} + X_{2,V} C_{2,V} + X_{3,V} C_{3,V} + \left( C_{4,V} X_{4,H} \right)^T \qquad \ldots (3)$$

$$Y_{pred,H} = \left( X_{1,V} C_{1,H} + X_{2,V} C_{2,H} + X_{3,V} C_{3,H} \right)^T + C_{4,H} X_{4,H} \qquad \ldots (4)$$

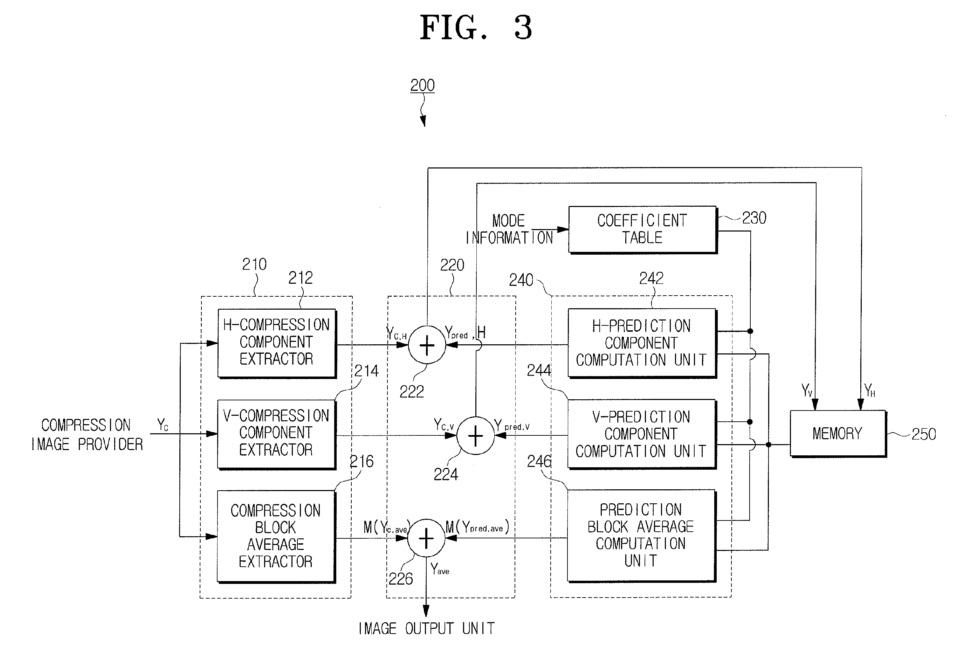

The reduced image generator 200 generates a reduced image using the averages of the prediction blocks, computed by the above-described process. Figure 3 is a detailed block diagram of the reduced image generator 200 of Figure 1. In Figure 3, the reduced image generator 200 comprises an extractor 210, an adder 220, a coefficient table 230, a computation unit 240, and a memory 250.

The extractor 210 extracts the average, V-compression components and H-compression components of blocks (hereinafter, is referred to as "compression blocks") of a compression image provided by the compression image provider 110. This extractor 210 comprises an H-compression component extractor 212, a V-compression component extractor 214, and a compression block average extractor 216.

The H-compression component extractor 212 extracts "H-compression components of a compression block" (frequency values at the rightmost components of the compression block), and outputs a horizontal matrix $Y_{C,H}$ of the extracted H-compression components of the compression block.

The V-compression component extractor 214 extracts "V-compression components of the compression block" (frequency values at the bottommost components of the compression block), and outputs a vertical matrix $Y_{C,V}$ of the extracted V-compression components of the compression block.

The compression block average extractor 216 extracts a DC value which is a frequency value of (0,0) at the upper leftmost component of the compression block, and outputs the extracted DC value as the average $M(Y_{C, ave})$ of the compression blocks.

The coefficient table 230 outputs coefficient matrices determined according to the compression mode to the computation unit 240.

The computation unit 240 computes the H-prediction components, V-prediction components, and average of a prediction block. This computation unit 240 comprises an H-prediction component computation unit 242, a V-prediction component computation unit 244, and a prediction block average computation unit 246.

The H-prediction component computation unit 242 computes a horizontal matrix $Y_{pred,H}$ of the H-prediction components of the prediction block using horizontal matrices $X_{,H}$ of H-components and vertical matrices $X_{,V}$ of V-components of the neighboring blocks stored in the memory 250, and coefficient matrices output from the coefficient table 230. This computation is performed using (4) of Equation 3 described above.

The V-prediction component computation unit 244 computes a vertical matrix $Y_{pred,V}$ of the V-prediction components of the prediction block using horizontal matrices $X_{,H}$ of H-components and vertical matrices $X_{,V}$ of V-components of the neighboring blocks stored in the memory 250, and coefficient matrices output from the coefficient table 230. This computation is performed using (3) of Equation 3 described above.

The prediction block average computation unit 246 computes the average $M(Y_{pred,ave})$ of the prediction block using horizontal matrices $X_{,H}$ of H-components and vertical matrices $X_{,V}$ of V-components of the neighboring blocks stored in the memory 250, and coefficient matrices output from the coefficient table 230. This computation is performed using (1) and (2) of Equation 3 described above.

The adder 220 computes the horizontal matrix $Y_H$ of the H-components of a block, vertical matrix $Y_V$ of the V-components of the block, and the average $M(Y_{pred})$ of the block, using the output from the extractor 210 and output from the computation unit 240. This adder 220 comprises an H-components adder 222, a V-components adder 224, and an average adder 226.

The H-components adder 222 stores in the memory 250 the horizontal matrix $Y_{,H}$ of the H-components of the block obtained by summing the horizontal matrix $Y_{C,H}$ of the H-compression components of the compression block output from the H-compression component extractor 212 and the horizontal matrix $Y_{pred,H}$ of the H-prediction components of the prediction block computed by the H-prediction component computation unit 242.

This is because the horizontal matrix $Y_{,H}$ may be used in order to compute the average, H-prediction components, and V-prediction components of a next prediction block.

The V-components adder 224 stores in the memory 250 the vertical matrix $Y_{,V}$ of the V-components of the block obtained by summing the vertical matrix $Y_{C,V}$ of the V-compression components of the compression block output from the V-compression component extractor 214 and the vertical matrix $Y_{pred,V}$ of the V-prediction components of the prediction block computed by the V-prediction component computation unit 244. This is also because the vertical matrix $Y_{,V}$ may be used in order to compute the average, H-prediction components, and V-prediction components of the next prediction block.

The average adder 226 outputs the average $M(Y_{ave})$ of the block, obtained by summing the average $M(Y_{C,ave})$ of the compression block output from the compression block average extractor 216 and the average $M(Y_{pred,ave})$ of the prediction block computed by the prediction block average computation unit 246, to the image output unit 130. An image comprising the above average values refers to a reduced image. If a block has a size of 4X4, the reduced image as generated above may occupy 1/16 of the current image area, because 16 pixels are reduced to one pixel.

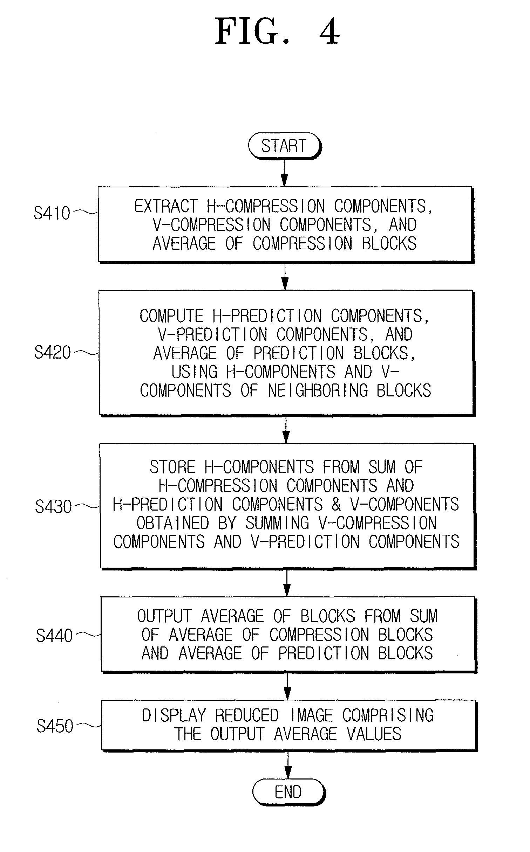

Hereinafter, a process for generating a reduced image according to an exemplary embodiment of the present invention will be described in detail with reference to Figure 4. Figure 4 is a flowchart explaining a method for generating a reduced image according to an exemplary embodiment of the present invention.

In Figure 4, the H-compression component extractor 212, V-compression component extractor 214 and compression block average extractor 216 included in the extractor 210 extract the H-compression components, V-compression components and average of a compression block, respectively, in operation S410.

As a result, the horizontal matrix $Y_{C,H}$ of the H-compression components, vertical matrix $Y_{C,V}$ of the V-compression components and average $M(Y_{C, ave})$ of the compression block are output from the extractor 210.

The H-prediction component computation unit 242, V-prediction component computation unit 244 and prediction block average computation unit 246 included in the computation unit 240 compute the H-prediction components, V-prediction components, and average of the prediction block, using the H-components and V-components of the neighboring blocks stored in the memory 250 and coefficient matrices output from the coefficient table 230, respectively, in operation S420.

As a result, the horizontal matrix $Y_{pred,H}$ of the H-prediction components, vertical matrix $Y_{pred,V}$ of the V-prediction components and average $M(Y_{pred,ave})$ of the prediction block are output from the computation unit 240.

Subsequently, the H-component adder 222 and V-component adder 224 included in the adder 220 store in the memory 250 "H-components of a block" obtained by summing the H-compression components of the compression block and H-prediction components of the prediction block, and "V-components of a block" obtained by summing the V-compression components of the compression block and V-prediction components of the prediction block in operation S430.

More specifically, the horizontal matrix $Y_{,H}$ of the H-components and vertical matrix $Y_{,V}$ of the V-components of the block are stored in the memory 250.

Additionally, the average adder 226 included in the adder 220 outputs the block average $Y_{ave}$ obtained by summing the average $M(Y_{C,ave})$ of the compression block and average $M(Y_{pred,ave})$ of the prediction block to the image output unit 130 in operation S440.

The image output unit 130 displays a reduced image comprising the averages output from the average adder 226 on a display in operation S450.

The process for generating a reduced image of an original image without decoding blocks of the original image comprising the blocks encoded by intra prediction was explained above in detail, according to the exemplary embodiment of the present invention.

The exemplary embodiment of the present invention may be applied in the case of generating a reduced image of an original image compressed according to a compression method, such as an H.264 compression technique, in which blocks are encoded by intra prediction.

Additionally, in the exemplary embodiment of the present invention, the blocks having a size of $4 \times 4$ to constitute an image are used, but the present invention is not limited thereto. Accordingly, the present invention can be applied in the case of blocks having a size of $8 \times 8$ or a size of $16 \times 16$.

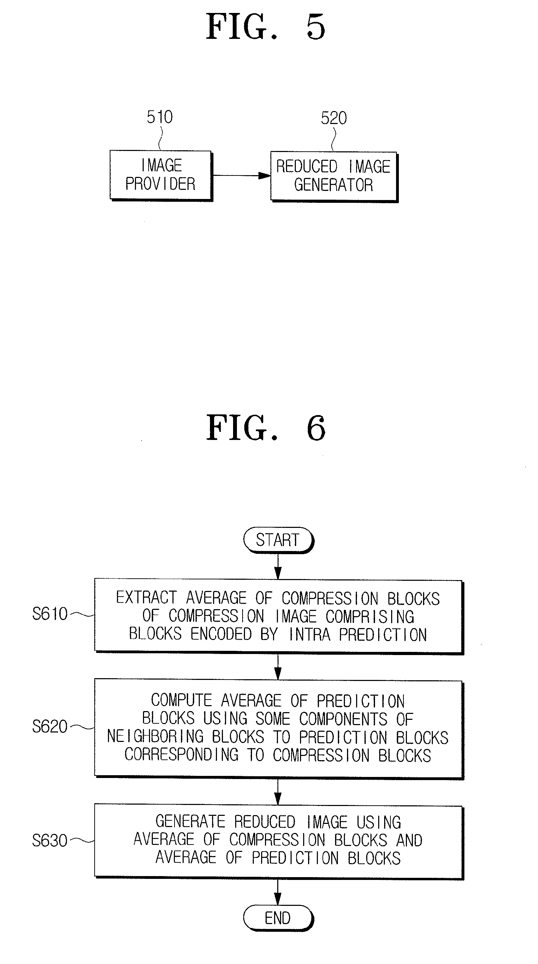

Hereinafter, another exemplary embodiment of the present invention will described in detail with reference to Figures 5 and 6.

Referring to Figure 5, an image apparatus according to another exemplary embodiment of the present invention comprises an image provider 510 and a reduced image generator 520. The image provider 510 provides a compression image comprising blocks encoded by intra prediction to the reduced image generator 520. The reduced image generator 520 generates a reduced image, based on averages of compression blocks of the compression image provided by the image provider 510 and averages of prediction blocks computed using a portion of components of neighboring blocks to the prediction blocks corresponding to the compression blocks.

In a process for generating a reduced image according to another exemplary embodiment of the present invention, as shown in Figure 6, the reduced image generator 520 extracts the averages of compression blocks of a compression image provided by the image provider 510 in operation S610. Additionally, the reduced image generator 520 computes the averages of the prediction blocks using a portion of components of neighboring blocks to the prediction blocks corresponding to the compression blocks in operation S620. Next, the reduced image generator 520 generates a reduced image using the averages of the compression blocks and the averages of the prediction blocks in operation S630.

Accordingly, it is possible to implement the method for generating a reduced image of an original image and the image apparatus thereof, without decoding blocks of the original image comprising the blocks encoded by intra prediction.

According to the exemplary embodiments of the present invention as described above, a reduced image of an original image may be generated without decoding blocks of the original image comprising blocks encoded by intra prediction. Therefore, the computations and time required for generating the reduced image can be reduced.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations within the scope of the claims will be apparent to those skilled in the art.

**Claims**

1. A method for generating a reduced size image, the method comprising:

extracting an average of a compression block of a compression image, the compression image comprising blocks encoded by intra prediction;

computing an average of a prediction block ($y_{pred}$), using a portion of components of at least one of neighboring blocks ($x_1$, $x_2$, $x_3$, $x_4$) of the prediction block ($y_{pred}$) corresponding to the compression block; and

generating a reduced image using the average of the compression block and the average of the prediction block ($y_{pred}$).

**2.** The method as claimed in claim 1,

wherein the neighboring blocks ($x_1$, $x_2$, $x_3$, $x_4$) are positioned diagonally above and left; above; diagonally above and right; and left of the prediction block ($y_{pred}$), and

wherein the generating comprises summing the average of the compression block and the average of the prediction block ($y_{pred}$) to generate a reduced image.

**3.** The method as claimed in claim 1 or 2, wherein the computing of the average of the prediction block ($y_{pred}$) uses frequency values at bottommost components of a neighboring block ($x_1$) diagonally above and left of the prediction block ($y_{pred}$), frequency values at bottommost components of a neighboring block ($x_2$) above the prediction block ($y_{pred}$), frequency values at bottommost components of a neighboring block ($x_3$) diagonally above and right of the prediction block, and frequency values at rightmost components of a neighboring block ($x_4$) to the left of the prediction block.

**4.** The method as claimed in any one of the preceding claims, further comprising:

extracting components at bottommost components of the compression block and components at rightmost components of the compression block;

computing components at bottommost components of the prediction block ($y_{pred}$) and components at rightmost components of the prediction block, using the portion of the components of the at least one of neighboring blocks ($x_1$, $x_2$, $x_3$, $x_4$) to the prediction block ($y_{pred}$); and

storing bottommost components of a block, computed using the bottommost components of the compression block and the bottommost components of the prediction block ($y_{pred}$), and rightmost components of the block, computed using the rightmost components of the compression block and the rightmost components of the prediction block ($y_{pred}$).

**5.** The method as claimed in any one of the preceding claims, wherein the compression image comprising the blocks encoded by intra prediction is an image compressed using an H.264 compression standard.

**6.** An image apparatus comprising:

an image provider (110) configured to provide a compression image comprising blocks encoded by intra prediction; and

a reduced image generator (200) configured to generate a reduced image using an average of a compression block of the compression image and an average of a prediction block ($y_{pred}$) computed using a portion of components of at least one of neighboring blocks ($x_1$, $x_2$, $x_3$, $x_4$) of the prediction block ($y_{pred}$) corresponding to the compression block.

**7.** The device as claimed in claim 6, wherein the reduced image generator (200) comprises:

a compression block average extractor (216) configured to extract the average of the compression block;

a prediction block average computation unit (246) configured to compute the average of the prediction block ($y_{pred}$) using a portion of components of the at least one of the neighboring blocks ($x_1$, $x_2$, $x_3$, $x_4$) which are positioned diagonally above and left; above; diagonally above and right; and left of the prediction block; and

an average adder (226) configured to sum the average of the compression block and the average of the prediction block ($y_{pred}$) to generate a reduced image.

**8.** The device as claimed in claim 7, wherein the prediction block average computation unit (246) is configured to compute the average of the prediction block ($y_{pred}$), using bottommost components of a neighboring block ($x_1$) diagonally above and left of the prediction block ($y_{pred}$), bottommost components of a neighboring block ($x_2$) above the prediction block ($y_{pred}$), bottommost components of a neighboring block ($x_3$) diagonally above and right of the prediction block ($y_{pred}$), and rightmost components of a neighboring block ($x_4$) to the left of the prediction block ($y_{pred}$).

9. The device as claimed in any one of claims 6 to 8, wherein the reduced image generator (200) comprises:

an extractor (210) configured to extract bottommost components of the compression block, rightmost components of the compression block, and an average of the compression block;

a computation unit (240) configured to compute bottommost components of the prediction block ($y_{pred}$), rightmost components of the prediction block ($y_{pred}$), and an average of the prediction block ($y_{pred}$) using the portion of the components of the at least one of neighboring blocks ($x_1$, $x_2$, $x_3$, $x_4$) to the prediction block ($y_{pred}$); and

a memory (250) configured to store bottommost components of a block, computed using the bottommost components of the compression block and the bottommost components of the prediction block ($y_{pred}$), and rightmost components of the block, computed using the rightmost components of the compression block and the rightmost components of the prediction block ($y_{pred}$).

10. The device as claimed in any one of claims 6 to 9, wherein the compression image comprising the blocks encoded by intra prediction is an image compressed using an H.264 compression standard.

# FIG. 1

110
COMPRESSION IMAGE PROVIDER

120
DECODER

130
IMAGE OUTPUT UNIT

200
REDUCED IMAGE GENERATOR

# FIG. 2

| | | | | | | | | | | | |
|---|---|---|---|---|---|---|---|---|---|---|---|
| $X_1$ | | | | $X_2$ | | | | $X_3$ | | | |
| A | B | C | D | E | F | G | H | I | J | K | L |

$X_4$ — M, N, O, P

$y_{pred}$

$y_{14}$, $y_{24}$, $y_{34}$

$y_{41}$, $y_{42}$, $y_{43}$, $y_{44}$

$y_{pred}$, H

$y_{pred}$, V

# FIG. 3

# FIG. 4

START

S410 — EXTRACT H-COMPRESSION COMPONENTS, V-COMPRESSION COMPONENTS, AND AVERAGE OF COMPRESSION BLOCKS

S420 — COMPUTE H-PREDICTION COMPONENTS, V-PREDICTION COMPONENTS, AND AVERAGE OF PREDICTION BLOCKS, USING H-COMPONENTS AND V-COMPONENTS OF NEIGHBORING BLOCKS

S430 — STORE H-COMPONENTS FROM SUM OF H-COMPRESSION COMPONENTS AND H-PREDICTION COMPONENTS & V-COMPONENTS OBTAINED BY SUMMING V-COMPRESSION COMPONENTS AND V-PREDICTION COMPONENTS

S440 — OUTPUT AVERAGE OF BLOCKS FROM SUM OF AVERAGE OF COMPRESSION BLOCKS AND AVERAGE OF PREDICTION BLOCKS

S450 — DISPLAY REDUCED IMAGE COMPRISING THE OUTPUT AVERAGE VALUES

END

# FIG. 5

510

520

```
IMAGE
PROVIDER
```

→

```
REDUCED IMAGE
GENERATOR
```

# FIG. 6

( START )

↓

S610 — EXTRACT AVERAGE OF COMPRESSION BLOCKS OF COMPRESSION IMAGE COMPRISING BLOCKS ENCODED BY INTRA PREDICTION

↓

S620 — COMPUTE AVERAGE OF PREDICTION BLOCKS USING SOME COMPONENTS OF NEIGHBORING BLOCKS TO PREDICTION BLOCKS CORRESPONDING TO COMPRESSION BLOCKS

↓

S630 — GENERATE REDUCED IMAGE USING AVERAGE OF COMPRESSION BLOCKS AND AVERAGE OF PREDICTION BLOCKS

↓

( END )